# EUROPEAN PATENT SPECIFICATION

(11) **EP 0 583 233 B1**
(45) Date of publication and mention of the grant of the patent: **15.03.2000**
(21) Application number: 93850157.4
(22) Date of filing: 13.08.1993
(51) Int. Cl.: H04B 7/26, H04J 3/17, H04Q 7/20

(54) **Multisubscriber unit for a radio telephony system**
Einheit für mehrere Teilnehmer für ein Funktelephonsystem
Unité pour plusieurs abonnés pour un système de radio-téléphonie

(30) Priority: 13.08.1992 US 929337; 09.03.1993 US 28502; 08.03.1993 US 27968
(43) Date of publication of application: 16.02.1994
(73) Proprietor: Hughes Electronics Corporation, El Segundo, California 90245-0956 (US)
(72) Inventor: Kaul, Pradeep, Darnestown, Maryland 20878 (US); Kay, Stanley E., Rockville Maryland 20853 (US); Parr, Michael I., San Diego, Calif. 92130 (US); Avis, Graham, San Diego, California 92130 (US)
(74) Representative: Johansson, Lars E.

(56) References cited:
- EP-A- 0 304 955
- US-A- 4 737 975
- COMPUTER COMMUNICATIONS, vol.13, no.3, April 1990, LONDON GB pages 131 - 135, XP000116538 LE-NGOC ET AL. 'ISDN implementation for a point-to-multipoint subscriber radio system'
- PROCEEDINGS PACIFIC TELECOMMUNICATIONS: WEAVING THE TECHNOLOGICAL AND SOCIAL FABRIC, 14 January 1990, HONNOLULU, HI, US pages 258 - 260, XP000400748 THOMAS 'The last mile'

## Description

### BACKGROUND OF THE INVENTION

### Field of Invention

The present invention relates to a radio telephony communication and more particularly to a multisubscriber unit for radio telephony communication and a method of communicating subscriber telephones through a radio link with a base station via a multisubscriber unit, the invention being especially appropriate for use in connection with combined fixed and mobile communication systems. While the invention is subject to a wide range of applications, it is particularly suited for use with a cellular communication system.

### DISCUSSION OF RELATED ART

Fixed telephone service may be provided by several different types of systems. The most common is wiring telephone lines directly to the home. However, in some cases, such systems are either too expensive, or the time required for installation is too great. Wireless telephone systems for fixed installations have been proposed that overcome some of the disadvantages of wired systems. One such system involves using a 450 MHz frequency to provide a connection between a local office and a subscriber's home. Such a system is designed for low density rural application, and does not achieve the spectral efficiency and frequency reuse needed to service high density city environments.

Other systems have been proposed that utilize a large number of transmission sites (microcells) which must be deployed to geographically cover a specific area. This multiplicity of sites must receive electrical power, and also be tied back to one or more switching centers. However, the cost of power, backhaul facilities and the microcelles themselves are not always cost effective for certain applications.

Cellular communications systems are now used for mobile telephone service where radio coverage is divided into cells; and each cell is assigned a number of available radio frequencies. A mobile telephone station transmits and receives control and voice communications information from a base station within the same cell. The base stations of each cell are controlled by a cellular system switching and control network that provides connection with the world-wide telecommunications system.

There are many different formats for cellular communications systems. In one type of digital cellular communications system, for example, the allocated transmit and receive frequency bands are divided into individual radio channels of communication, with the transmit and receive frequencies being separated from each other. Each radio channel has a frame format, that is, each channel transmits a succession of frames, which has a duration typically of forty milliseconds, and constitutes one cycle of a regularly recurring series. Each subscriber's information is transmitted in one of six time slots. Each time slot includes one hundred sixty-two symbols, and has a duration of approximately 6.67 milliseconds. Each slot corresponds to a burst of RF energy that includes compressed digital speech signals, which are decompressed at the receiving station and converted to analog or sixty-four kilobits per second (KBPS) pulse code modulation (PCM) speech.

Typically, an encoder is provided for each transmitter, both at a base station and a mobile station, which compresses the speech signals before modulation and transmission thereof. One type of digital cellular communications system, for example, includes a technique for low rate speech coding, referred to as Codebook Excited Linear Prediction (CELP), which involves searching a table or codebook of excitation codewords for that codeword which, when filtered through pitch and linear predictive coding short term synthesis filters, produces an output sequence which is closest to the input sequence. This output sequence of synthesized speech codes occurs upon excitation of the input sequence which, in turn, occurs upon the introduction of the digital equivalent of analog speech.

It is technically possible for fixed subscribers to use the cellular mobile telephones describes above. Due to the much greater subscriber densities in fixed systems, such use could soon result in too many subscribers for a single cell, thus, exceeding the capacity of a single cell site. Also, the expense of a complete mobile telephone for each subscriber could be to great.

EP 0 304 955 discloses a multisubscriber unit for radio communication between subscriber telephones and a base station transceiver, the base stating having a link to a telephon network. The multisubscriber unit coprises a plurality of connectors for providing electrical communication with the subscriber telephones and a subscriber interface coupled to the connectors for detecting an off-hook condition at each of the telephones. The unit further comprises means for modulating and demodulating data from the telephone for transmission over the radio link as well as a transceiver for transmitting the modulated data from each telephone to the base station and for receiving data from the base station for transmission to the telephones. A similar unit is also known from US 4,737,975.

EP 0 304 955 also discloses a method of communicating a plurality of subscriber telephones through a radio link with a base station via a multisubscriber unit. The method comprises detecting an off-hook condition at one of the subscriber telephones and transmitting a signal to the base station requesting allocation of a reverse channel. The base station transmits then a reverse channel assignment to the multisubscriber unit assigning a channel from among a plurality of channels.

The purpose of the present invention is to provide a multisubscriber unit for a communication system for fixed subscribers with quality as high as a mobile cellular communication system, but which is suitable for high density applications in a cost effective manner, and to propose a method of communicating a plurality of subscriber telephones through a radio link with a base station remotely located from the telephones via a multisubscriber unit.

### SUMMARY OF INVENTION

This purpose is obtained by a multisubscriber unit according to claim 1 and a method according to claim 9.

The invention, as embodied and broadly described herein, thus relates to a combined system for communication of individual fixed and mobile telephone subscribers with a remotely located base station of a radio communication system which comprises a base station having a transceiver for receiving and transmitting signals from and to subscriber locations, a base station controller for performing speech coding and digital speech interpolation connected between the transceiver and a mobile switching center, at least one mobile subscriber telephone having an antenna for radiating and collecting signals corresponding to speech spurts to and from the base station transceiver, a multisubscriber unit remotely located from the base station having an antenna for radiating and collecting signals corresponding to speech spurts of a plurality of different individual subscribers to and from the base station transceiver, and a telephone handset for each of said plurality of different individual subscribers at fixed locations electrically coupled to the multisubscriber unit.

In another aspect, as embodied and broadly described herein, the invention thus relates to a method of communication by a plurality of mobile telephones and a plurality of fixed telephone handsets coupled to a single multisubscriber unit with a base station transceiver of a cellular communication system, comprising establishing, at the base station transceiver a pool of available traffic transmission channels, each traffic transmission channel having a time slot in a repeating time division multiple access frame at a predetermined carrier frequency, responding, at a multisubscriber unit to detection of a speech spurt, by transmitting a request for assignment of a traffic transmission channel, searching at the base station for an available traffic transmission channel from the pool of available traffic transmission channels in response to receipt of the assignment request, transmitting an identification of the located channel to the multisubscriber unit and removing the located channel from the pool of available traffic channels in response to location of an available traffic transmission channel at the base station and initiating transmission of the speech spurt in the located and identified traffic transmission channel of the time division multiple access frame in response to receipt of the identification of the located channel at them multisubscriber unit. It is to be understood that both the foregoing general description and the following detailed description are exemplary and explanatory only and are not restrictive of the invention, as claimed.

The accompanying drawings, which are incorporated in and constitute a part of this specification, illustrate embodiments of the invention and together with the description, serve to explain the principles of the invention.

### BRIEF DESCRIPTION OF THE DRAWINGS

FIG. 1 is a schematic block diagram of a combined fixed and mobile radio communication system in accordance with the present invention;
FIG. 2 is a schematic block diagram of the multisubscriber unit of FIG. 1 in accordance with one embodiment of the invention;
FIG. 3 is a schematic block diagram of a multisubscriber unit of FIG. 1 in accordance with a second embodiment of the invention;
FIG. 4 is a schematic diagram illustrating the multisubscriber line cards of the multisubscriber unit of FIG. 1;
FIG. 5 is a schematic diagram of the data subscriber interface of FIGS. 2 and 3;
FIG. 6 is a schematic diagram of the speech processor of FIGS. 2 and 3 with voice activity detectors connected according to a first arrangement;
FIG. 6A is a schematic diagram of the speech processor of FIGS. 2 and 3 with the voice activity detectors connected according to a second arrangement;
FIG. 6B is a schematic diagram of the speech processors of FIGS. 2 and 3 with the voice activity detectors connected according to a third arrangement;
FIG. 7 is a schematic diagram of the transmission and RF distribution interface of FIG. 2;
FIG. 8 is a schematic diagram of the processing and transmission interface of FIG. 3;
FIG. 9 is a schematic diagram of the RF distribution function of FIG. 3;
FIG. 10 is a schematic diagram of an alternate type of connection between a subscriber and the multisubscriber unit of FIG. 1;
FIG. 11 is a schematic diagram of a high speed data arrangement for the multisubscriber units of FIGS. 2 and 3;
FIGS. 12 and 13 are timing and sequence diagrams illustrating the operation of the multisubscriber units of FIGS. 2 and 3.

### DETAILED DESCRIPTION OF THE PREFERRED EMBODIMENTS

Reference will now be made in detail to the present preferred embodiment of the invention, an example of which is illustrated in the accompanying drawings. Wherever possible, the same reference numerals will be used throughout the drawings to refer to the same or like components. When using the term connected or electrically connected herein, it is not intended to mean directly connected but may mean ultimately connected, where components may be connected therebetween but are omitted in that they do not aid in the understanding of the invention. Also, when using the term switch herein, it is understood that it can be any device or method for connecting and unconnecting inputs and outputs of software or hardware components.

Prior to discussing the details of the illustrated system, the system can be best understood by first presenting a general overview and discussion of the system, its architecture and requirements.

A fixed wireless network is capable of bringing telephone service to an area without a wired network in a timely and cost effective manner. The system of the present invention uses RF (radio frequency) or over-the-air channels to connect individual subscribers or groups of fixed subscribers to the conventional Public Switched Telephone Network (PSTN). The system can also be used to connect subscriber to a private telephone network The use of a cellular system as the basis for the fixed wireless network removes the need to provide wire or other land lines between subscriber sites and the telephone network.

The cellular system includes a mobile communications system, wherein the geographic area to be served by the system is divided into a number of sections called cells. Each cell is served by a base station which consists of radio transceiver equipment that is capable of covering its cell region. The base station communicates with mobile terminals and fixed terminals over a specified set of air carrier channels. Mobile terminals may consist of vehicle mounted, hand-held and other portable telephone sets, and the fixed terminals may be located in an office building, apartment house or in separate homes and businesses. The set of base stations in one installation is served by mobile switching centers which provide a seamless interface to and from the conventional Public Switched Telephone Network (PSTN).

For stationary subscribers the system pools a group of co-located subscribers and serves them by a shared, multi-user terminal referred to as a multisubscriber unit, or MSU. The resources of the MSU are allocated to a subscriber on a call-by-call basis. This shared resource approach greatly reduces the amount of required hardware, thus keeping the cost-per-subscriber low. By appropriate dimensioning of MSU resources, the reliability and availability of telecommunications services can be ensured. The system of the present invention is preferably implemented using a Time Division Multiple Access (TDMA), digital speech interpolating, channel hopping format in order to maximize the use of available frequency resources.

The wireless system has a base station subsystem which can be either a self-contained unit or further subdivided into a base station controller (BSC) with one or more subordinate Base Transceiver Stations (BTS). The BSC is responsible for performing call and channel management. The fixed subscribers preferably use a modified speech compression algorithm similar to the mobile, which is less processing-intensive than the mobile subscribers' speech compression algorithm. The mobile subscribers may use, for example, the full-rate digital time division multiple access format as described in the United States' EIA/TIA IS-54 or the European GSM format. The base station controller processes calls for both fixed and mobile subscribers. Individual subscriber telephones preferably handle either fixed or mobile speech algorithms. In other words, one group of speech algorithms can serve fixed users and another group can serve mobile users. Mobile subscribers may use analog, or any variety of TDMA or CDMA (Code Division Multiple Access) formats.

Base transceiver stations provide a number of radio channels. Each radio channel preferably is configured to support either fixed subscribers or mobile subscribers. The radio channels used for fixed subscribers are processed on a single channel unit. Several fixed subscribers are supported by a single multisubscriber unit hereinafter described.

Reference will now be made in detail to the present preferred embodiments of the invention, examples of which are illustrated in the accompanied drawings.

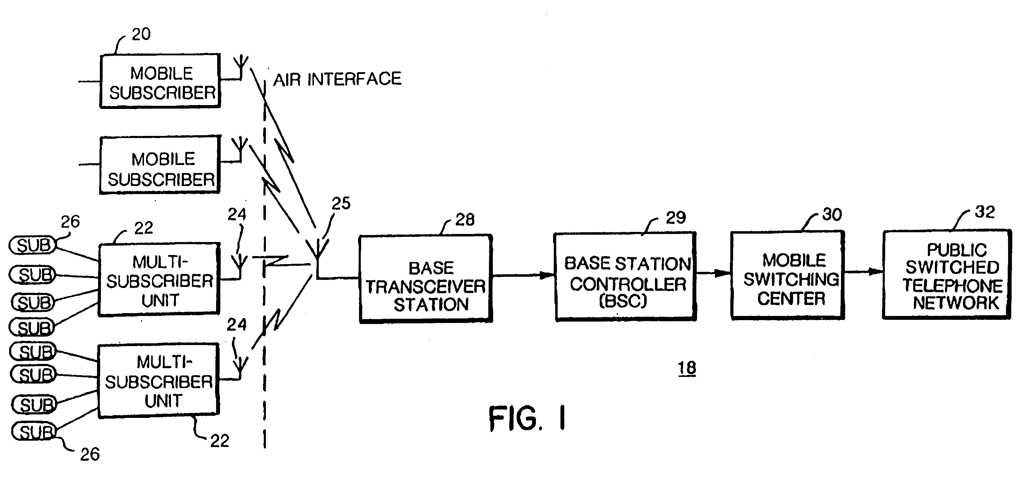

The exemplary embodiment of the system of the present invention is shown in FIG. 1 and is represented generally by the reference numeral 18. Referring to FIG. 1, a wireless telephone system 18 comprises a plurality of mobile subscribers 20, and one or more multisubscriber units (MSU) 22 for each cell. Each MSU 22 has two sides. One side has an antenna 24 facing antenna 25 of a remotely located base transceiver station 28, and another side to which is connected a plurality of individual fixed subscriber unit telephones 26. The individual fixed telephones, typically less than one hundred, are aggregated at MSU 22. MSU 22 preferably has fewer outgoing voice circuits than incoming voice interfaces so that some degree of aggregation is performed locally. Telephones 26 may be wire or radio coupled to the respective unit 22, and may be any type of voice data or visual interface between the person and system such as a handset, speaker telephone or videophone, for example.

The fixed wireless system 18 includes a base transceiver station 28, a base station controller (BSC) 29, which is connected to a mobile switching center (MSC), 30 which is connected to a public switched telephone network 32, which network is not part of the present system. The BTS, BSC and MSC may be combined in different ways in an alternative embodiment.

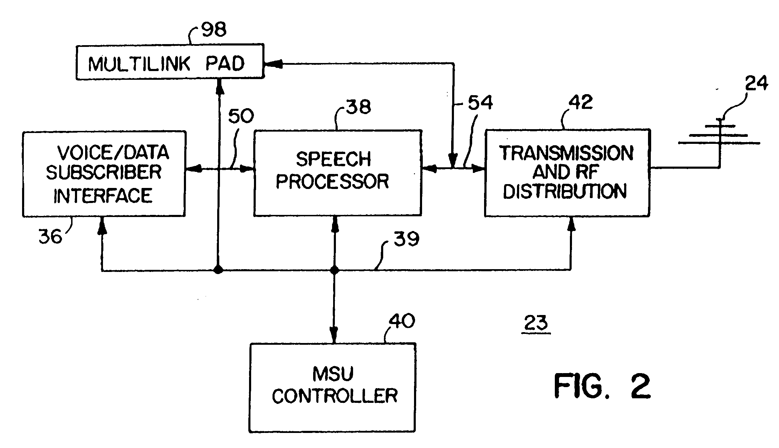

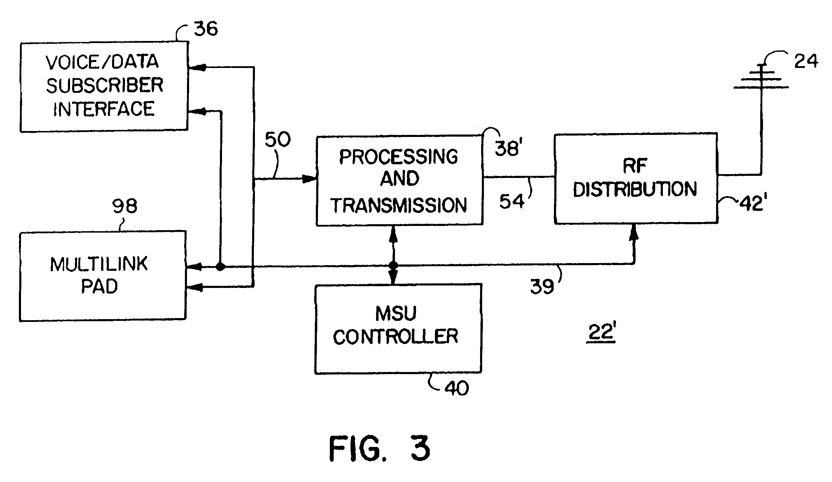

There are two alternative embodiments of the MSU. The locally non-blocking configuration shown in FIG. 2, can simultaneously establish calls to all of the attached subscriber telephones 26 without providing dedicated radio and voice coding components to each active call. The alternative configuration shown in FIG. 3 dedicates voice coding and radio components to each active call.

Referring to the embodiment of FIG. 2, each locally non-blocking multisubscriber unit or MSU 22 has an antenna 24, a functional voice/data subscriber interface 36, a speech processor 38, an MSU controller 40, and a transmission and distribution interface 42; and, preferably, a multi-link pad 98. Voice/data interface 36, speech processor 38, transmission and RF distributor 42 and multi-link pad 98 are controlled by a controller 40 via a control bus 39. A PCM (pulse code modulated) bus 50 connects the voice/data interface 36 and speech processor 38. A compressed bus 54 connects the speech processor 38 to transmission and RF distributor interface 42.

FIG. 3 refers generally to an alternate embodiment of an MSU referred to generally as 22', which includes an antenna 24, a voice/data subscriber interface 36, a processing and transmission module 38', an MSU controller 40, an RF distribution module 42' and preferably a multi-link pad 98. MSU 22' differs from the local non-blocking (LNB) MSU 22 primarily in that its processing and transmission section 38' comprises a collection of fixed TDMA radios where the MSU 22 of FIG. 2 includes shared resources. Also, the RF distribution 42' collects the transmitted signals from the TDMA radios and distributes the received signals to the TDMA radios. In FIG. 3, the multi-link pad 98, and the voice/data subscriber interface 36 are connected to the processing and transmission module 38' by PCM bus 50; and controlled by controller 40 via control bus 39. Processing and transmission module 38' and RF distribution interface are also controlled via control bus 39. Processing and transmission module 38' are connected to RF distribution interface over compressed bus 54.

In the embodiments of FIGS. 2 and 3, each radio channel preferably uses a TDMA format in which each channel has six time slots, each capable of carrying the output of a speech coder, or providing input to a speech synthesizer. A channel hopping, digital speech interpolation approach is preferred so that channels are allocated only upon the detection of a speech or data. Channels are then preferably deallocated at the end of the speech or data making the deallocated data available for use by other subscribers.

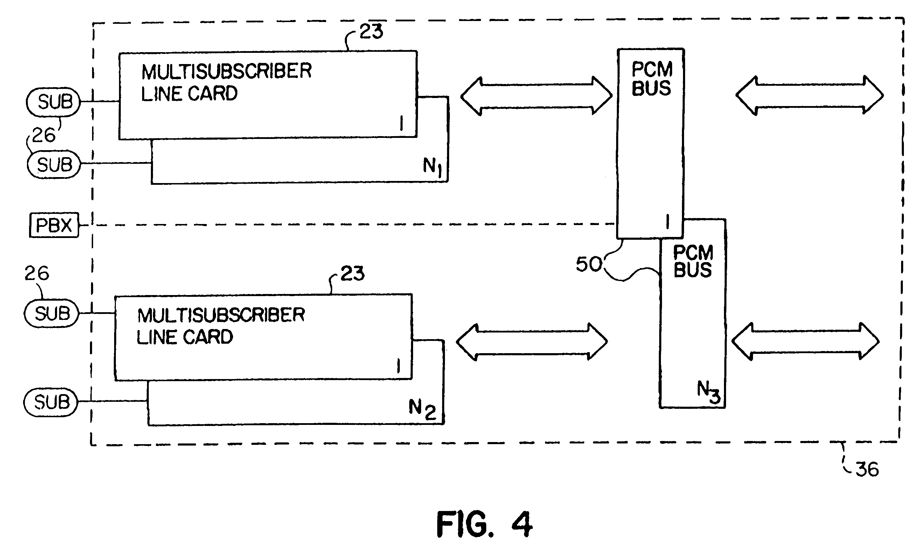

Referring to FIG. 4 each voice or data subscriber interface 36 includes up to six multisubscriber interface cards 23 capable of handling up to 16 subscribers. Telephones 26 connect to MSU 22 via a data subscriber interface and/or voice subscriber interface 36 which provides speech and line signaling to a group of subscribers. Interface 36 is implemented by one or more multisubscriber line cards 23, as indicated by N₁, N₂. Each card 23 may, optionally, provide test functions and echo cancellation functions to its attached subscribers. Alternative embodiments may connect a PBX (private branch exchange) interface directly to PCM bus 50.

Each voice data subscriber interface 36 provides appropriate protocol and signal formats to telephone handsets 26. It also provides on and off-hook information to the MSU controller 40. Each subscriber interface 36 also converts the analog subscriber unit telephone signal to 64 kbps PCM. The voice subscriber interface 36 is modular in two ways. First, multisubscriber line cards 23 may be added one at a time to serve the required number of local subscribers. Second, PCM busses 50 may be added to serve very large groups of subscribers. By providing one attachment per subscriber to PCM bus, the voice subscriber interface is non blocking. FIG 4 shows that groups of line cards 23 can comprise different numbers (N₁, N₂) of cards and that the number of PCM busses (N₃) may be different from them. Interface 36 accepts a variety of data formats and protocols including well known Group 3 fax and packet data and converts them into the PCM bus format for transmission.

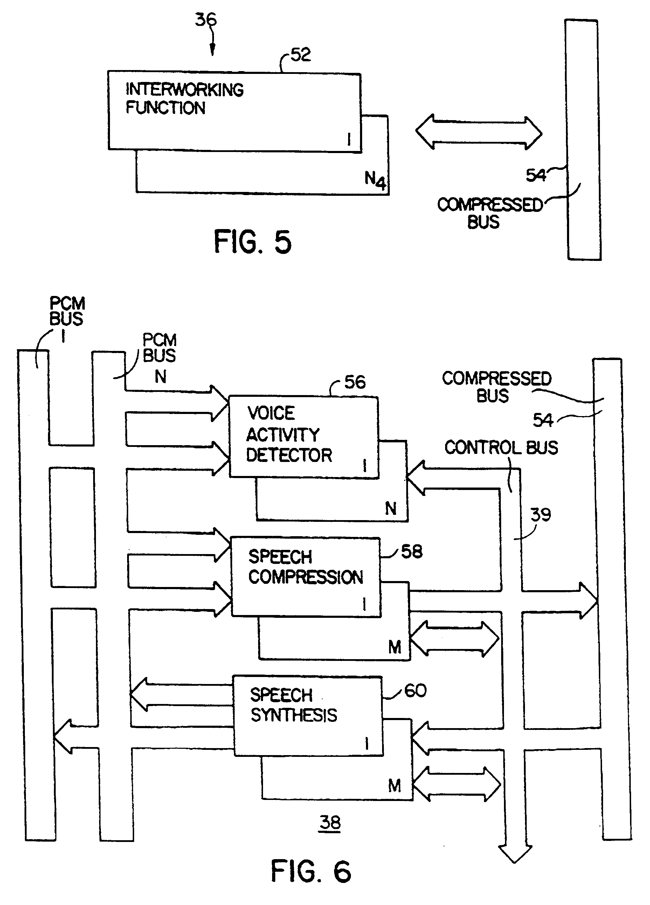

In one preferred embodiment, the speech and data subscriber functions are combined. In an alternate embodiment, they may be separate. As shown in FIG. 5, the voice/data subscriber interface 36 comprises N₄ interworking functions 52 which interface compressed bus 54. The data subscriber interface portion accommodates data and facsimile subscribers. In the illustrated embodiments, one subscriber is supported on each data interface. The data interface provides N₄ interworking functions which provides physical interfacing to an analog output of the data terminal or facsimile machine, recognition of special tones to control the call progress and signaling rate, conversion of these signals to digital messages, and formatting these messages into the compressed bus format.

The speech processor 38 performs three major functions: voice activity detection to support the digital signal interpolation (DSI) process, speech coding to reduce the transmission bit rate requirements from 64 kbps to a much lower rate for radio transmission, and speech synthesis to reconstruct the compressed signal back to 64 kbps PCM. The transmission and RF distribution equipment 42 transmits and receives the compressed speech on radio channels to and from remotely located sites which collect such transmissions from a plurality of MSU's 22. The MSU controller 40 manages the call processing, speech compression and transmission functions.

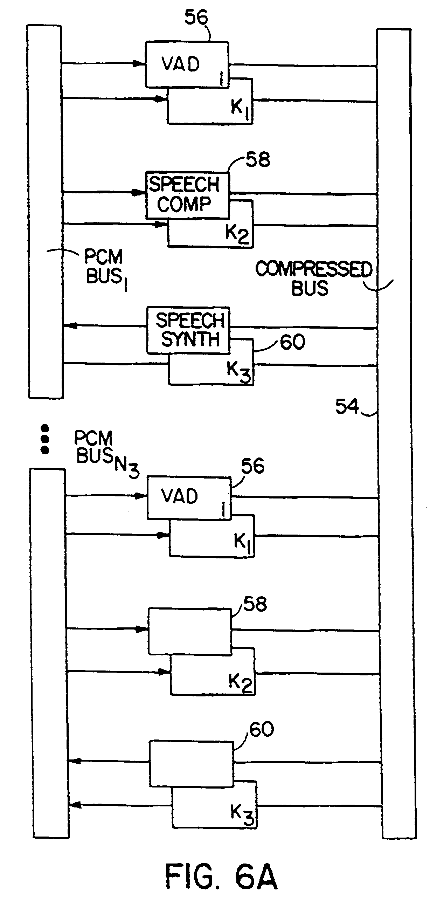

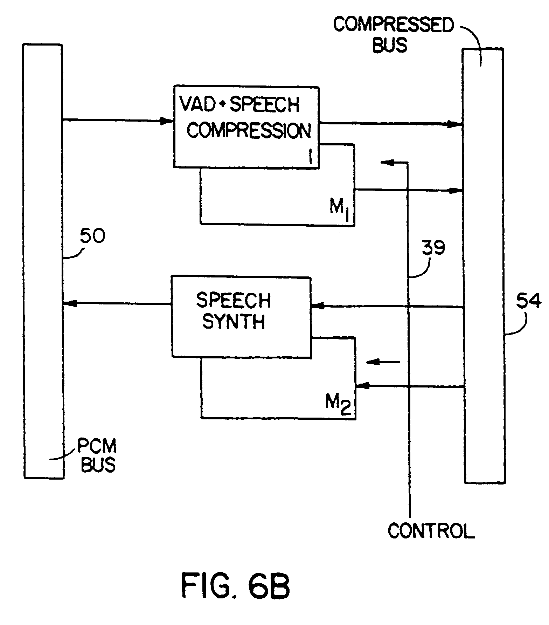

Referring to FIG. 6, the speech processor 38, which translates speech between PCM voice format and compressed speech format includes a voice activity detector 56, a speech compression module 58, and a speech synthesis module 60.

The functions shown in the FIG. 6 may be arranged several different ways depending on economic considerations. The arrangement shown in FIG. 6 shows each speech function connected to all of the PCM busses 50. Alternatively, as shown in FIG. 6A, separate groups of voice activity detectors 56, speech compressors 58 and speech synthesizers 60 can be connected to individual PCM busses 50. Another arrangement is to distribute the voice activity detection function among the compressors and synthesizers as shown in FIG. 6B. Note that the same number (M) of compressors 58 and synthesizers 60 are used in FIG. 6, and that this number differs from the number of voice activity detectors 56 (N). The number of speech synthesizers and compressors required in the described embodiments is the maximum number of telephones that can be off-hook simultaneously. In an alternative embodiment, fewer voice speech synthesizer/compressors could be provided and speech would be clipped if there was excessive concurrent speech activity.

The voice activity detection function 56 examines the PCM data samples from the multisubscriber unit for voice activity. The onset of voice activity is reported to the MSU controller 40 via the control bus 39. The speech compression function 58 is directed by the MSU controller 40 to collect PCM samples from a particular PCM channel on one of the PCM busses 50. This selected PCM channel is generally one for which voice activity has been detected, although occasionally background noise level measurements are transmitted. The speech synthesis function 60 accepts compressed samples from the compressed bus 54 and presents 64 kbps PCM data to the PCM bus 50. Each of these three functional elements interfaces the MSU controller 40 via the control bus 39. The voice activity detector 56 sends voice activity detection, i.e., start of speech and end of speech indications. The speech compressor receives commands indicating which PCM channels it should process. The speech synthesizer receives commands telling it which PCM channel should receive its output. The interface with the compressed bus may take a variety of forms. In the described embodiment, each synthesizer and compressor 38 has a dedicated slot on the compressed bus 54. Alternatively, the slots may be dynamically assigned.

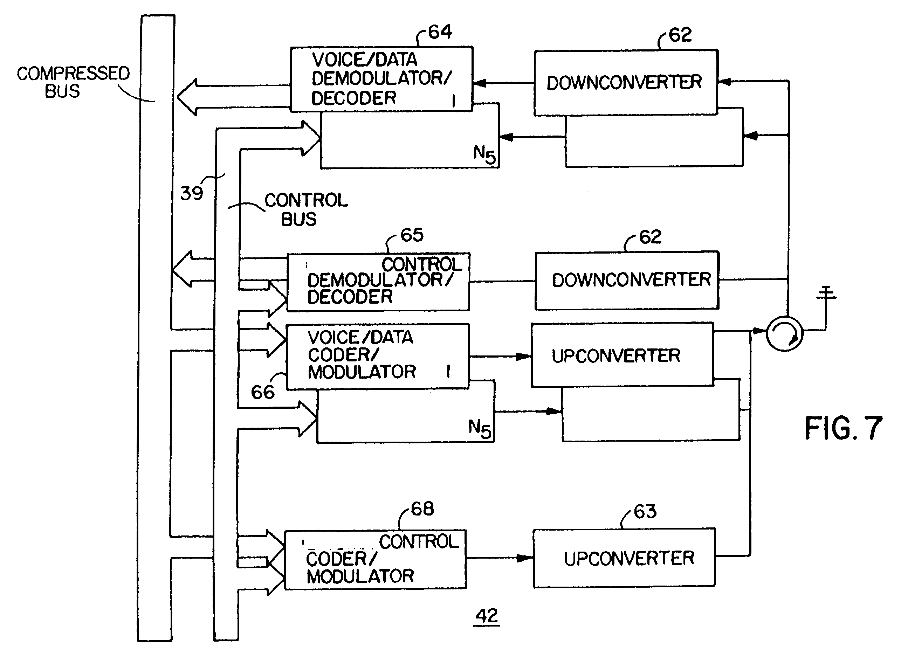

Referring to FIG. 7, the transmission and distribution function 42 includes down converter 62, voice/data demodulator/decoder units 64, up converter 63, control demodulator/decoder units 65, voice/data coder/modulator 66, and control coder demodulator 68. Preferably, the RF channels operate in the US cellular radio band. However, the MSU can be modified for any frequency band. Down converters 62 translate the RF channel to a lower frequency at which demodulator 62 synchronizes with the received signal and extracts the compressed information. The decoders 64, and 65 use the forward error correcting code redundancy to correct the errors in the received data. This data is then presented to the compressed bus. If the coding scheme for mobile subscriber units is more complicated than for fixed subscriber units, then the demodulation and decoding may be tailored to serve both the mobile and fixed subscriber units, or they may be tailored to the fixed cellular environment to reduce complexity. The transmission function 42 also includes units for control signaling.

The coder 66, 68 takes data from the compressed bus and adds the forward error correcting redundancy bits. The modulator 66, 68 formats the data, performs the required filtering and passes the information to upconverters 63 which translate it to the appropriate RF frequency.

Antenna such as 24, may be omni-directional or may exhibit discrimination. In the preferred embodiment, the antenna 24, is directional to minimize interference and multipath effects. It is to be noted that the system of the present invention may have more than one antenna such as 24 to provide for diversity of reception.

The RF and distributor 42 may be implemented with a fixed frequency, full frequency hopping, or partial frequency hopping, modulator/demodulator and upconverter/down converters shown in FIG. 7. The system may be implemented with a number of fixed frequency channel units to support voice/data traffic. Each MSU may use all six slots on a single frequency. For these units, simulations show that almost all of the clipping events are due to local blockage. In other words, there are generally slots available to make assignments somewhere in the pool, but not on the few channels available to the fixed frequency units. This alternative, however, is still viable. The simulations show that MSU units configuring to transmit using a channel hopping, DSI TDMA format on six channels for each of four frequencies (24 channels) will handle sixty subscribers at less than 1% blockage. The channel assignment algorithm in such a TDMA system is random in that the first available slot at a building having a number of fixed subscribers 26 is used for traffic. It may be possible to improve the performance by choosing channels to favor the busier buildings. This makes the fixed frequency channel units a limited technique.

Alternatively, the MSU can be implemented with fully hopping channel units which can access any RF channel of the cellular system on a given time slot which implies that each channel unit has ping-pong synthesizers which provide instantaneous switching between channels. Even so, the digital finite impulse response filters and analog filters have some memory which cannot switch instantaneously. It is possible to sacrifice three or four symbols of the sync word and still have adequate performance in the fixed environment. Preferably, a few symbols of each slot are reserved for synthesizer tuning to avoid the case of the well known ping-pong synthesizer. This will have the same blocking performance as the normal digital speech interpolation (DSI) pool as long as the number of active channels at a site doesn't exceed the number of channels available at the site. For most practical cases, this should be a relatively rare event. For example, in a speech spurt simulation with sixty subscribers per building and MSU units configured for six channels for each of three frequencies (18 channels), there were never more than ten subscribers with speech spurts active at the same time. It is possible, however, that the subscriber will occasionally incur a TDMA frame of additional latency while waiting for a slot.

Finally, the partially hopping channel unit is a cheaper unit because it only needs one synthesizer and there is no overlap between slots. It can only serve three slots per channel unit but they can hop over the entire pool. If a minimum of two channel units is provided per MSU, then all six slots in a frame will be covered. The performance issue will then be the latency of accessing the channel.

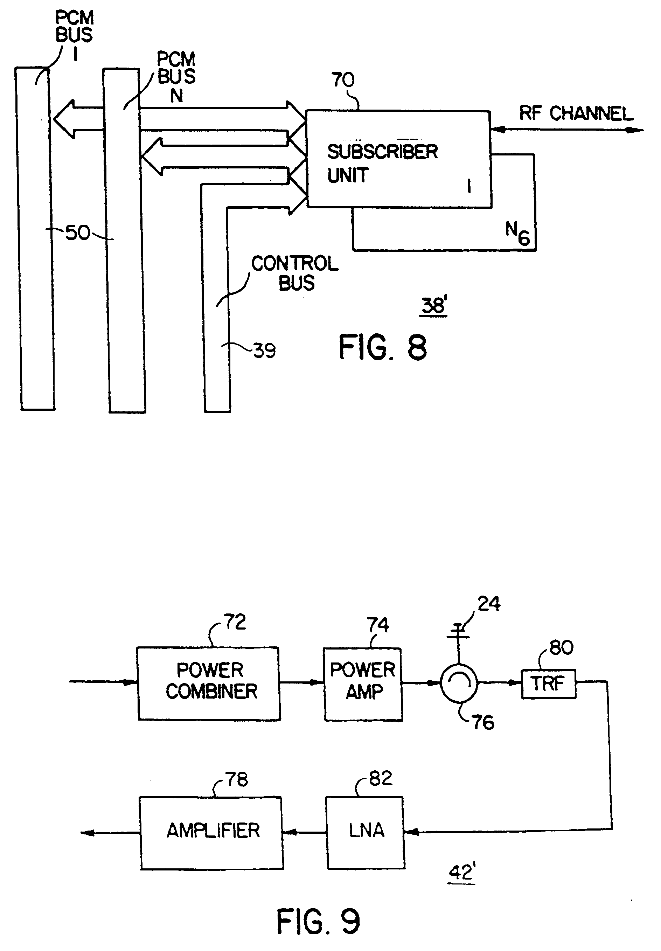

Referring to FIG. 8, the processing and transmission section of FIG. 3 includes a frequency hopping, TDMA, DSI subscriber unit 70. Each TDMA subscriber unit 70 interfaces one or more PCM busses 50. Preferably unit 70 has an internal switch which selects the PCM bus. Alternatively, the unit 70 can decode all PCM busses simultaneously. The control bus 39 interface tells the unit which channels to select. It also indicates whether the channel is voice or data. The unit 70 accepts the PCM channel, performs call establishment, voice activity detection and speech compression/synthesis functions. It also performs all of the transmission related functions, such as upconversion/downconversion, modulation/demodulation and FEC coding/decoding. For the system of FIG. 3, the call control function modulator/demodulator and the voice modulator/demodulator would correspond to subscriber unit 70 of FIG. 8.

Referring to FIG. 9, the RF distribution function 42' has a power combiner 72, a power amplifier 74, a circulator 76, an amplifier 78, a transmit reject filter 80, and a low noise amplifier 82. Power combiner 72 combines the RF outputs from all units 70. The combined signal drives a linear power amplifier 74. This, in turn, is fed to a circulator 76 and then to directional antenna 24. The directional antenna and close spacing of cell sites anticipated for the fixed applications allows relatively low power amplifiers 74 to be used. In other embodiments, individual power amplifiers could be used in each element 70 with a filter type combiner. The antenna 24 provides a receive signal to circulator 76. The circulator output enters a transmit reject filter 80 which filters the transmit band to prevent overload of low noise amplifier 82 front end. The output of the low noise amplifier is then boosted by amplifier 78 and distributed to the units 70.

Alternative arrangements can be implemented. For instance, separate receive and transmit antennas can be provided to avoid the circulator and requirements of filter 80. Also, more than one receive antenna can provide resistance to multipath fading.

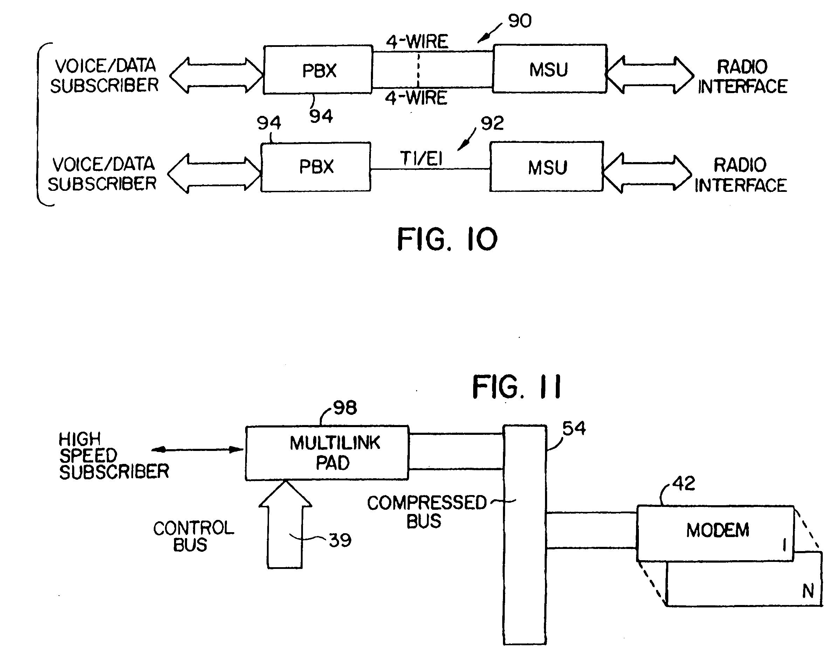

Referring to FIG. 10 an alternate interface configuration of FIGS. 2 and 3 is the PBX connection, which affects the subscriber interface portion 36 of the embodiments of FIGS. 2 and 3 in a similar manner. Referring to configurations 90 and 92 PBX 94 performs local call routing and handles any special services required by the local subscribers. In the configuration 90, the PBX provides four wire interface circuits to the MSU. In the configuration 94, a T1 or E1 interface is provided depending on the type of PBX used. The MSU serving the four wire interface is identical to FIGS. 2 and 3 except for the four wire rather than two wire interface. This is true for both voice and data applications. As previously mentioned, the MSU can provide either dedicated data channels in which case the PBX must route data applications to those channels, or combined voice/data interfaces in which case the routing is not needed. For the T1/E1 PBX interface 92, the PBX will interface to the MSU's internal PCM bus via an electrical level and format conversion circuit.

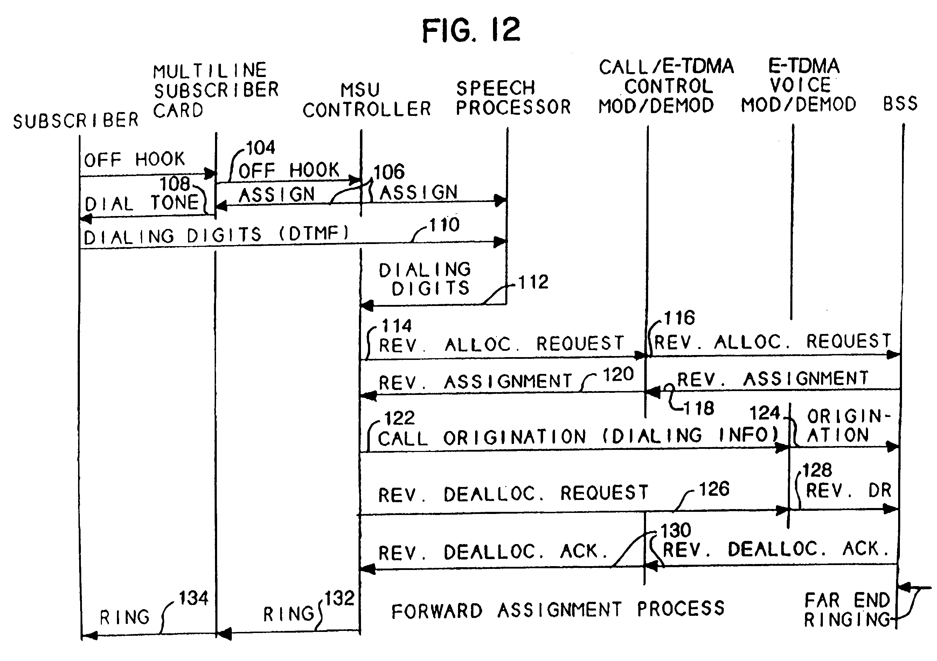

Referring to FIG. 11, an additional functionality offered by the MSU of FIG. 2 is the transport of high speed data through a multi-link protocol which includes PAD 98, compressed bus 54, and a transmission and RF distributor 42. In a channelized radio system, there are two ways to transport information at rates higher than the basic channel rate. One can group the bandwidth of 2 or more channels into one wider bank, higher rate channel, or one can split the information across multiple narrow band channels. The former approach has the disadvantage that it makes dynamic channel allocation very difficult in a cellular system when different bandwidth channels are permitted. The usual difficulty with the latter approach is that a multiplicity of radio channels are needed rather than just one; and that some means of distributing the information among the radio channels is required. In the MSU of FIG. 2, the latter problems are minimized.

The multi-link PAD 98 interfaces the high speed subscriber. It breaks the data stream into packets which are placed in the compressed bus 54. Multiple packets can be placed on the compressed bus for the same time slot of the air interface. The MSU of FIG. 2 already has the compressed bus interface and multiple modem attachments to the transmission and RF distribution interface 42 to provide the "higher than one channel" throughput.

Of course, for this part of the system to work, there must be a corresponding function at the cell sites and MSC. This function must distribute the high speed data among many channel units and collect and combine the high speed received data. The advantages of this approach are that high speed data can be carried on the existing MSU hardware of FIG. 2. It will be possible to dynamically assign a modem to handle voice or data during each slot since that is a base MSU function. In the multisubscriber unit 22' multi-link PAD 98 is connected to compressed bus 54 and to controller 40 via control bus 39.

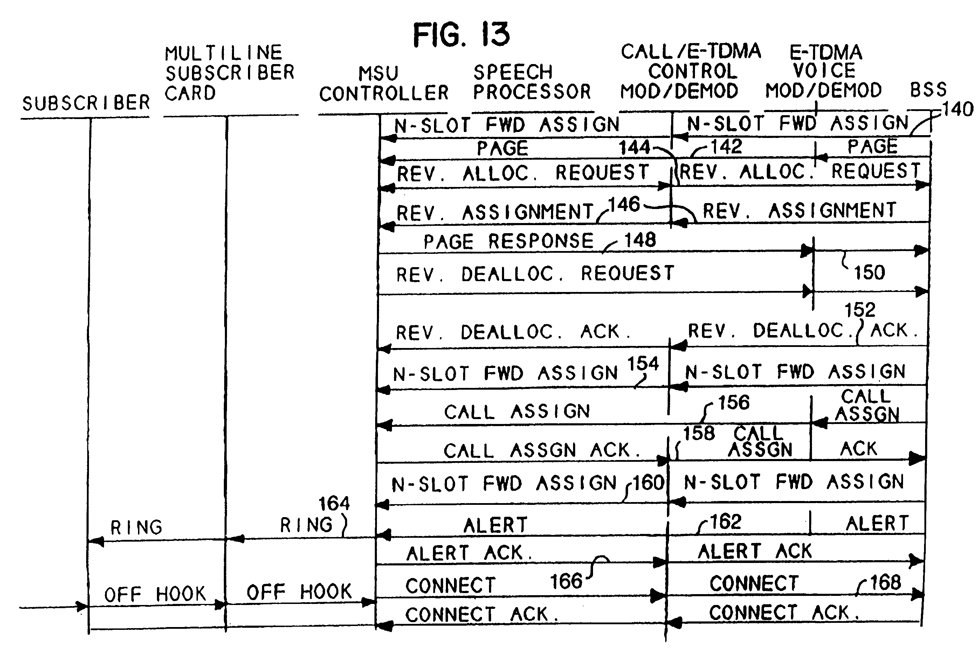

The operation of the systems above will first be described briefly in terms of a preferred method of TDMA transmission that uses DSI to allocate channels only as needed. At the end of a spurt of speech or data the corresponding channel is deallocated and returned to the DSI pool of available channels. Such a system is described in detail in U.S. Patent Application US-A-5299198 filed December 6, 1990, the disclosure of which is hereby incorporated by reference herein. Following this description is a more detailed description of the signaling sequence of the MSU of FIGS. 2 and 3 as shown in FIGS. 12 and 13.

The DSI based TDMA procedures provide allocation of slots for both call traffic and overhead information. The overhead information is analogous to the analog control channel information of the mobile system. The signaling mechanism for mobile subscribers is the same as the mobile system. Note that the control and traffic of mobile subscribers is partitioned from the fixed subscribers. The signaling mechanism for the BSS (Base Station Subsystem) 〈--〉 MSC (Mobile Switching Center) interface is the A-interface which is the link between the MSC and the BSC. This is based on Signaling System 7 (SS7) access procedures which refer to the procedures between the mobile switching center's visitor location register and the home location register and the European GSM cellular call establishment procedures. Modifications to any conventional A-interface procedures will be mentioned herein. The physical interface between the BSS and MSC is CCITT G.703 (E1) with 64 kbps PCM traffic channels.

Subscriber level addressing of a particular mobile or fixed subscriber is accomplished by a directory number. The specific format of the directory number is network dependent. The IS-54 air interface uniquely addresses a subscriber by its Mobile Identification Number (MIN). Preferably, in the present invention, the interface addresses the MSU uniquely within a cell via its MSU identification number (MSU-id). All slot allocations for overhead are addressed via the MSU-id while all slot allocations for traffic are addressed via the call identifier. The translation of a directory number to a Mobile Identification Number (MIN) takes place at the NSS (Network Subsystem). For fixed subscribers, the MSU has the ability to reassign directory numbers to MSU ports without reconfiguration.

The MIN for fixed subscribers will include the MSU identification number (MSU-id). Alternatively, a non-hierarchical addressing method can be used. To place a call, the subscriber picks up the telephone and dials the directory number of the called party. The MSU detects the off-hook condition of the telephone and indicates to the BSS that a subscriber wants to place a call. The NSS and BSS authenticate the subscriber MIN. The BSS indicates to the (MSC) to complete the call to the called party. The traffic path is established for the call and the called party is signaled via ringing. The called party answers the telephone and the MSC signals the BSS that the call is established. The traffic channel between the BSS and MSU is allocated on a speech spurt basis. The MSU requests a reverse direction overhead traffic slot from the BSS. When the BSS assigns the slot, the MSU sends an origination message to the BSS. The origination message provides the addressing and security information of the MSU and subscriber. After the origination is sent, the overhead traffic slot is deallocated. The BSS establishes a signaling connection with the MSC over the A-interface via SS7 Signaling Connection Control Part (SCCP) and no actual authentication is performed. The BSC always responds positively. Ciphering is not done at the BSS. When the MSC asks the BSS to do ciphering, the BSS always responds as if ciphering was initiated. The BSS allocates a forward direction overhead traffic slot and sends a call-id assignment message. The call-id is preferably analogous to the mobile-Id. The call-id assignment message also contains the reverse response (RR) channel assignment for the MSU response message. The MSU responds to the call-Id assignment with a call-Id ack message sent to the RR (reverse response) channel. The BSS initiates call signaling for the A-interface via the setup message. The MSC indicates the A-interface PCM traffic channel to the BSS via the assign request message. The BSS indicates to the MSC when the traffic path from MSU to MSC is complete. This is signaled via the assign complete message. Thus, the MSC indicates to the BSS when the called party is being alerted. This is signaled via the alert message. The MSC will also place a ringing tone on the traffic channel toward the origination. The MSC indicates to the BSS when the call is answered via the connect message. The BSS responds via the connect ack. The call is established.

For an MSU terminated call MSC queries the VLR/HLR (Visitor Location Register/Home Location Register) for the location area of the called directory number. The MSC pages the BSS where the MSU is located. The BSS determines the MSU of the subscriber and sends the page explicitly to that MSU. The MSU responds to the page. The BSS and MSC authenticate the subscriber. The traffic channel is established from the BSS to the MSC. The MSU signals the local subscriber's telephone via a ring. The subscriber answers the telephone and the MSU indicates to the BSS that the call is established. The traffic channel between the BSS and the MSU is allocated on a speech spurt basis. The MSC sends a page request to the BSS indicating an incoming call. The BSS extracts the cell information from the page request and extracts the MSU-id from the MIN in the page request. The BSS then allocates a forward overhead traffic slot for the MSU. The BSS sends a page message over the air on the assigned overhead traffic slot. The addressed MSU requests a reverse direction overhead traffic slot. When the BSS assigns the slot, the MSU sends a page response indicating readiness to accept the call. The BSS establishes an SCCP connection with the MSC over the A-interface. No actual authentication is performed. The BSC always responds positively. The BSS allocates a forward direction overhead traffic slot. The BSS then sends a call-id assignment message. The call-id assignment message also contains the reverse response (RR) channel assignment for the MSU response message. The MSU responds to the call-id assignment with a call-id ack message sent on the RR channel. The MSC initiates call signaling for the A-interface via the setup message. The MSC indicates the A-interface PCM traffic channel to the BSS via the assign request message. The BSS indicates to the MSC when the traffic path from MSU to MSC is complete. This indication is signaled via a message that the assignment is completed. The BSS allocates a forward direction traffic slot for the call and sends an alert message. This instructs the MSU to signal the called subscriber. The alert message also contains the reverse response (RR) channel assignment for the MSU response message. The MSU rings the subscriber's telephone and sends an alert ack message to the BSS on the RR channel. The BSS informs the MSC of the alerting via the A-interface alert message.

A more detailed description of the system will be given in connection with the description of the operation of the MSU of FIGS. 2 and 3 in connection with FIGS. 12 and 13. For the system of FIG. 3, the call control function modulator/demodulator and the voice modulator/demodulator would preferably correspond to the previously mentioned subscriber unit 70 of FIG. 8.

Referring to FIG. 12 for a call originating at telephone 26, when the subscriber's telephone 26 (FIG. 1) goes off-hook, the multiline card 23 in the MSU 22 signals this event to the MSU controller 40 as shown at 104.

The MSU controller 40 sends an assignment message at 106 to the multiple subscriber card telling it the particular speech code module to which it should route the dialing and speech information. MSU controller 40 also informs the speech processor at 106 that dialing digits will soon arrive. The multisubscriber line card 23 sends a dial tone to the subscriber as shown at 108.

The subscriber then dials the telephone number of the called party, and DTMF tones are sent by the line card to speech processor 38 at 110. The speech processor converts DTMF tones to dial digits and sends them to the MSU controller 40 at 112. Preferably, the dial tones are DTMF (Dual Tone Multiple Frequency) tones, however, pulses and other types of signaling can also be accommodated.

MSU controller 40 sends a Reverse Allocate Request at 114. This random access message is formatted and forward error correction coded and transmitted by the call control modulator 68 to the Base Station Subsystem (BSS). The BSS sends a reverse assignment 118 to the MSU. Thus, the MSU assigns a frequency and reserves a time slot in the DSI pool. The Call control 65 receives this message and passes it to the MSU controller at 120. The MSU controller 40 formats a call origination message at 122 to the voice demodulator which transmits it in a sequence of one or more voice slots at 124. The formatting of voice slots is designed to handle signaling information as well as voice. After the entire origination message has been sent, the MSU controller 40 sends a reverse deallocation request at 126. This message lets the BSS release this slot and subsequently assign it to some other purpose at 128.

The BSS acknowledges the reverse deallocation request at 130. Each time the called party's telephone rings as indicated at 132, the ring is passed back to the local subscriber at 134 using the protocol for forward speech assignment. After the far end subscriber goes off-hook, the protocol for sending speech spurts over the air interface between the MSU and the BSS is as described in the referenced patent application.

Referring to FIG. 13, which shows the call establishment for a call terminating at 26, BSS sends N-slot forward assignment message at 140. Thus, identifying a frequency and slot which will contain a message for this MSU. A page message informs the MSU of the incoming call at 142. MSU controller 40 requests the BSS to assign a frequency and slot so that the MSU can send the page response message at 144. BSS then sends the reverse assignment message at 146. The MSU controller 40 sends the page response message at 148 to the voice modulator/demodulator 66 which formats it and sends it over the air interface to the BSS at 150. After the entire page response message has been sent, the MSU controller 40 sends a reverse deallocation request at 156. This message lets the BSS release this slot and subsequently assign it to some other purpose. The BSS acknowledges the reverse deallocation request. The BSS then sends an N-slot forward assignment message at 154. This identifies the frequency and slot which will contain a message for this MSU. The BSS then sends the call assignment message at 156 which establishes this as an MSU terminated call. An acknowledgment is then sent from the MSU via the reverse control channel at 158 as described in more detail in the referenced patent application. BSS then sends N-slot forward assignment message at 160, thus identifying the frequency and slot which will contain the alert message for this MSU.

The BSS sends an alert message at 162 to the MSU for the designated voice slot. The MSU controller 40 responds by ringing the local subscribers telephone at 164. An alert acknowledge is sent by the MSU controller via the reverse control channel at 166. If the paged subscriber goes off-hook, the MSU controller sends a connect message on the reverse aloha channel at 168; the BSS acknowledges the connect at 170.

The protocol following this sequence is the voice protocol as described in the referenced U.S. Patent Application US-A-5299198.

In summary, the MSU monitors the status of each subscriber port. Off-hook indications invoke per call resource allocation and call establishment procedures. On-hook indications invoke per call resource deallocation and call release procedures. With respect to digit collection, inter-digit timeout is implemented to detect subscriber end of dialing. The timeout is system configurable. Alternatively, an end-of-dialing key can be defined to allow the subscriber to indicate the end of dialing to the system. In-progress DTMF signaling will be supported. The MSU will support ring generation for subscriber terminated calls. The cadence and period of the ringing is programmable on a system basis. The MSU will provide dial tone to the subscriber when an off-hook is detected, if not blocked. The MSU will provide alert tone to the subscriber for excessive off-hook with no call activity (permanent signal).

The Network Subsystem (NSS) will provide a busy tone if a call origination cannot be completed due to the unavailability of the called party. The MSU will provide a local congestion tone to the subscriber if a call origination cannot be serviced by the MSU or the Base Station Subsystem (BSS). Ring back tone to the origination subscriber is always generated by the NSS. Preferably, DSI based TDMA signaling will be used for all communications between the MSU and the BSS. Such TDMA signaling can include FAACh, which uses the traffic path, and control, which uses independent control channels within the DSI pool. The control channels of such a TDMA format can include the Forward Control Channel, the Reverse Response Channel, and the Reverse Aloha Channel (RA). Messages on the FC and RA channels are sent with time and frequency diversity.

Having described the presently preferred system embodiments and method of the invention, additional advantages and modifications will readily occur to those skilled in the art. Accordingly, the invention in its broader aspects is not limited to specific details, representative apparatus, and illustrative examples shown and described.

## Claims

1. A multisubscriber unit (22) for radio telephony communication between subscriber telephones (26) and a base station having a transceiver (28), said base station having a link to a telephone network (32), said multisubscriber unit comprising:
- a plurality of connectors for providing electrical communication with the plurality of subscriber telephones;
- a subscriber interface (23) coupled to the connectors for detecting an off-hook condition at each of the telephones;
- a processor (58) for modulating data from the telephones for transmission over the radio link;
- a transceiver (42) for transmitting the modulated data from each telephone at which data is detected to the base station and for receiving data from the base station for transmission to the telephones;
- a processor (60) for demodulating data from the transceiver for transmission through the connectors to the telephones,
**characterized** by
- a subscriber activity detector (56) for detecting, through the connectors, the presence of data to be transmitted at each telephone at which an off-hook condition is detected;
- the processor for modulating data comprising a plurality of modulators (58), each independently assignable to one of the plurality of telephones (26) and the processor for demodulating data comprising a plurality of demodulators (60), each independently assignable to one of the plurality of telephones (26); and by a controller (40) for assigning the modulators and demodulators among those telephones for which the presence of data is detected and for deallocating the modulators and demodulators from those telephones for which the end of data presence is detected.

2. The unit according to claim 1, wherein the data to be transmitted comprises speech, **characterized** in that the subscriber activity detector (56) comprises a speech spurt detector, in that the processor (58) for modulating data comprises a speech spurt encoder for converting spurts of speech into a compressed digital form, and in that the processor (60) for demodulating data comprises a decoder for converting compressed digital bit sequences into speech spurts.

3. The unit according to claims 1 or 2, **characterized** by means (40) coupled to the subscriber activity detector (56) for requesting the allocation of a traffic transmission channel from the base station upon the detection of the presence of data at a telephone (26).

4. The unit according to any one of the preceding claims, **characterized** by means coupled to the subscriber activity detector (56) for requesting the deallocation of a traffic transmission channel from the base station upon the detection of the end of data presence at a telephone (26).

5. The unit according to one or more of the preceding claims, **characterized** in that the transceiver (28) comprises means for transmitting and receiving frames of digital information in a time division multiple access format, each frame including a plurality of time slots for channel allocation and deallocation information.

6. The unit according to one or more of the preceding claims, **characterized** in that the subscriber interface (23) comprises means for generating a dial tone in response to the detection of an off-hook condition for communication to the telephone for which the off-hook condition was detected.

7. The unit according to one or more of the preceding claims, **characterized** in that the subscriber interface (23) comprises means for generating a ringing signal in response to an indication of an incoming call from the base station for communication to the telephone (26) for which the incoming call is intended.

8. The unit according to one or more of the preceding claims,
**characterized** by
- a bus (50) interconnecting the subscriber interfaces (23) and the processors (58, 60); and
- a multilink pad (98) connected to the bus having an input port for a high speed data subscriber for allowing data to be transmitted between the base station and the high speed data subscriber through the transceiver.

9. A method of communicating a plurality of subscriber telephones (26) through a radio link with a base staton (25, 28, 29, 30) remotely located from the telephones via a multisubscriber unit (22) connected to each of the plurality of subscriber telephones and comprising a plurality of modulators and a plurality of demodulators, the method comprising the steps of:
- detecting an off-hook condition at one of the subscriber telephones;
- transmitting a signal to the base station requesting allocation of a reverse channel;
- transmitting a reverse channel assignment to the multisubscriber unit from the base station assigning a channel from among a plurality of channels;
**characterized** by the additional steps of, after the step of detecting an off-hook condition,
- selecting one of the plurality of modulators (58) and one of the plurality of demodulators (60) in response to the detected off-hook condition and assigning the selected modulator and one selected demodulator to the one subscriber telephone;
- transmitting from the multisubscriber unit to the base station, a call origination message identifying the one subscriber telephone and a party to be called; and
- transmitting a request to deal locate the channel assignment in response to completion of the transmission of the call origination message.

10. The method of claim 9, **characterized** by, after the step of selecting a modulator (58), the step of generating a dial tone at the multisubscriber unit (22) and transmitting it to the telephone (26) at which the off-hook condition was detected.

11. The method of claim 9 or 10, **characterized** by, before the step of transmitting a call origination message, the step of receiving from the one subscriber telephone (26) a dialing sequence indicating a party to be called and using the received dialing sequence to generate the call origination message.

12. The method of any of the claims 9-11, **characterized** by the steps of:
- receiving at the multisubscriber unit a channel assignment and notification of an incoming call;
- transmitting from the multisubscriber unit to the base station a page response for completing a call origination;
- receiving at the multisubscriber unit from the base station a call assignment message establishing the incoming call as one that terminates at a subscriber telephone which is coupled to the multisubscriber unit;
- transmitting from the multisubscriber unit an ackowledgement of the call assignment message;
- transmitting, from the multisubscriber unit to the subscriber telephone at which the incoming call is to terminate, a ringing signal; and
- transmitting from the multisubscriber unit to the base station a connect message in response to an off-hook detection of the telephone.

13. The method of claim 12, **charactrized** by, after the step of transmitting a page response, the steps of:
- transmitting from the multisubscriber unit to the base station a deal location request for releasing the channel assigned by the channel assignment; and
- receiving at the multisubscriber unit from the base station acknowledgement of the deallocation request.

14. The method of claims 12 and 13, wherein the step of receiving a channel assignment and notification of an incoming call comprises the steps of:
- receiving at the multisubscriber unit a message identifying a channel for receipt of a page message;
- receiving at the multisubscriber unit a page message including an incoming call notification in the identified channel;
- transmitting from the multisubscriber unit a request to the base station to assign a channel for a response to the page message; and
- receiving from the base station a reverse assignment message assigning a channel for the page response.

15. The method of claim 9, said radio link comprising a base station transceiver (26), **characterized** by the steps of:
- establishing, at the base station transceiver (28) a pool of available traffic transmission channels, each traffic transmission channel having a time slot in a repeating time division multiple access frame at a predetermined carrier frequency;
- responding at the multisubscriber unit (22) to detection of an information spurt at a telephone (26), by transmitting a request for assignment of a traffic transmission channel;
- selecting at the base station an available traffic transmission channel from the pool of available traffic transmission channels in response to receipt of the channel assignment request;
- transmitting in a first slot an identification of the selected channel to the multisubscriber unit and removing the selected channel from the pool of available traffic channels; and
- transmitting the information spurt from the multisubscriber unit in the selected channel in response to receipt of the identification of the selected channel.

16. The method of claim 15, **characterized** by the steps of:
- detecting termination of the information spurt at the base station;
- transmitting a channel deallocation notice to the multisubscriber unit for deallocating the selected channel;
- releasing the selected channel to the pool of available traffic transmission channels.

17. The method of claim 16, **characterized** by the step of transmitting an acknowledgement of the channel deallocation notice from the multisubscriber unit to the base station, wherein the channel allocation notice includes an identification of an appropriate channel for transmission of the acknowledgement.

18. The method of claim 16 or 17, **characterized** in that the channel deallocation notice is transmitted in the selected channel.

19. The method of claim 15, **characterized** in that the step of responding at the multisubscriber unit (20) to detection of an information spurt at a telephone (26) comprises:
- detecting a speech spurt at the base station transceiver which is intended for transmission to one of the telephones from among the plurality of subscriber telephones.

20. The method of claim 19, **characterized** by the steps of:
- detecting, at the base station, termination of the speech spurt intended for the telephone; and
- transmitting to the multisubscriber unit notice of deallocation of the selected channel and releasing the selected channel to the pool of available traffic transmission channels.

21. The method of one or more of the claims 15 to 20, **characterized** in that the information spurt comprises a speech spurt and wherein the step of transmitting the speech spurt comprises compressing and encoding the detected speech spurt into a digital bit sequence.

22. The method of one or more of the claims 15 to 21, **characterized** in that the first time slot comprises a plurality of time division subslots, in that the channel assignment is transmitted in a subslot of the first slot and in that the first slot is of a different channel than the selected channel.

23. The method of one or more of the claims 15 to 22, **characterized** in that the step of transmitting an identification of the located channel comprises transmitting the identification with time, frequency or power level diversity.

24. The method of claim 22 or 23, **characterized** in that the first slot is a slot of a control channel having a plurality of slots assigned to different carrier frequencies.

## Patentansprüche

1. Einheit (22) für mehrere Teilnehmer für eine Funktelefon-Kommunikation zwischen Teilnehmertelefonen (26) und einer Basisstation, die ein Sende-Empfangs-Gerät (28) und eine Übertragungsstrecke zu einem Telefonnetz (32) hat, wobei die Einheit für mehrere Teilnehmer aufweist:
- mehrere Verbinder, um eine elektrische Kommunikation mit der Vielzahl von Teilnehmertelefonen bereitzustellen;
- ein Teilnehmerinterface (23), das mit den Verbindern gekoppelt ist, um einen Aushängezustand bei jedem Telefon festzustellen;
- einen Prozessor (58) zum Modulieren von Daten von den Telefonen zum Senden über die Funkübertragungsstrecke;
- ein Sende-Empfangs-Gerät (42) zum Senden der modulierten Daten von jedem Telefon, bei dem Daten festgestellt sind, an die Basisstation und zum Empfangen von Daten von der Basisstation zum Senden an die Telefone;
- einen Prozessor (60) zum Demodulieren von Daten vom Sende-Empfangs-Gerät zum Senden über die Verbinder an die Telefone,
gekennzeichnet durch
- einen Teilnehmer-Aktivitätsdetektor (56) zum Erfassen, über die Verbinder, des Vorliegens von zu sendenden Daten bei jedem Telefon, bei dem ein Aushängezustand festgestellt ist;
- die Tatsache, daß der Prozessor zum Modulieren von Daten eine Vielzahl von Modulatoren (58) aufweist, die jeweils unabhängig einem der Vielzahl von Telefonen (26) zuweisbar sind, und daß der Prozessor zum Demodulieren von Daten mehrere Demodulatoren (60) aufweist, die jeweils unabhängig einem der Vielzahl von Telefonen (26) zuweisbar sind; und durch eine Steuereinrichtung (40) zum Zuweisen der Modulatoren und Demodulatoren innerhalb der Gruppe der Telefone, für die das Vorliegen von Daten festgestellt ist, und zum Freigeben der Modulatoren und Demodulatoren von der Gruppe der Telefone, für die das Ende des Vorliegens von Daten festgestellt ist.

2. Einheit nach Anspruch 1, wobei die zu sendenden Daten Sprache enthalten, dadurch gekennzeichnet, daß der Teilnehmer-Aktivitätsdetektor (56) einen Sprachabschnittsdetektor aufweist, daß der Prozessor (58) zum Modulieren der Daten einen Sprachabschnitts-Codierer aufweist zum Umwandeln von Sprachabschnitten in eine komprimierte Digitalform, und daß der Prozessor (60) zum Demodulieren von Daten einen Decodierer aufweist zum Umwandeln komprimierter digitaler Bitfolgen in Sprachabschnitte.

3. Einheit nach einem der Ansprüche 1 oder 2, gekennzeichnet durch mit dem Teilnehmer-Aktivitätsdetektor (56) gekoppelte Mittel (40) zum Anfordern der Zuordnung eines Nachrichtensendekanals von der Basisstation bei Feststellen des Vorliegens von Daten bei einem Telefon (26).

4. Einheit nach einem der vorhergehenden Ansprüche, gekennzeichnet durch mit dem Teilnehmer-Aktivitätsdetektor (56) gekoppelte Mittel zum Anfordern der Freigabe eines Nachrichtensendekanals von der Basisstation bei Feststellen des Endes des Vorliegens von Daten bei einem Telefon (26).

5. Einheit nach einem oder mehreren der vorhergehenden Ansprüche, dadurch gekennzeichnet, daß das Sende-Empfangs-Gerät (28) Mittel aufweist zum Senden und Empfangen von Rahmen mit digitaler Information in einem Zeitvielfachzugriff-Format, wobei jeder Rahmen mehrere Zeitschlitze für Kanalordnungs- und Freigabeinformation enthält.

6. Einheit nach einem oder mehreren der vorhergehenden Ansprüche, dadurch gekennzeichnet, daß das Teilnehmerinterface (23) Mittel aufweist zum Erzeugen eines Wahltones als Reaktion auf das Feststellen eines Aushängezustandes, und zwar zum Senden an das Telefon, für das der Aushängezustand festgestellt wurde.

7. Einheit nach einem oder mehreren der vorhergehenden Ansprüche, dadurch gekennzeichnet, daß das Teilnehmerinterface (23) Mittel aufweist zum Erzeugen eines Rufsignals als Reaktion auf eine Anzeige eines eingehenden Anrufs von der Basisstation, und zwar zum Senden an das Telefon (26), für das der eingehende Anruf vorgesehen ist.

8. Einheit nach einem oder mehreren der vorhergehenden Ansprüche, gekennzeichnet durch
- einen Bus (50), der die Teilnehmerinterfaces (23) und die Prozessoren (58, 60) untereinander verbindet; und
- ein Mehrfachverbindungsfeld (98), das mit dem Bus verbunden ist und einen Eingangsanschluß für einen Hochgeschwindigkeitsdaten-Teilnehmer hat, um das Senden von Daten zwischen der Basisstation und dem Hochgeschwindigkeitsdaten-Teilnehmer über das Sende-Empfangs-Gerät zu ermöglichen.

9. Verfahren zur Kommunikation einer Vielzahl von Teilnehmertelefonen (26) über eine Funkübertragungsstrecke mit einer entfernt von den Telefonen angeordneten Basisstation (25, 28, 29, 30), und zwar mittels einer Einheit für mehrere Teilnehmer (22), die mit jedem der Vielzahl von Teilnehmertelefonen verbunden ist und eine Vielzahl von Modulatoren und eine Vielzahl von Demodulatoren aufweist, wobei das Verfahren die Schritte aufweist:
- Feststellen eines Aushängezustandes bei einem der Teilnehmertelefone;
- Senden eines Signals an die Basisstation, mit dem die Zuordnung eines Rückkanals beantragt wird;
- Senden einer Rückkanal-Zuweisung von der Basisstation an die Einheit für mehrere Teilnehmer, wobei ein Kanal aus einer Vielzahl von Kanälen zugewiesen wird;
gekennzeichnet durch die zusätzlichen Schritte, nach dem Schritt des Feststellen eines Aushängezustandes:
- Auswählen eines der Vielzahl von Modulatoren (58) und eines der Vielzahl von Demodulatoren (60) als Reaktion auf den erfaßten Aushängezustand und Zuweisen des ausgewählten Modulators und eines ausgewählten Demodulators zu dem einen Teilnehmertelefon;
- Senden einer Anrufsherkunftsnachricht, die das eine Teilnehmertelefon und einen anzurufenden Teilnehmer identifiziert, von der Einheit für mehrere Teilnehmer an die Basisstation; und
- Senden einer Anforderung, die Kanalzuweisung freizugeben, als Reaktion auf einen Abschluß des Sendens der Anrufsherkunftsnachricht.

10. Verfahren nach Anspruch 9, gekennzeichnet durch den Schritt, nach dem Schritt des Auswählens eines Modulators (58), des Erzeugens eines Wähltons bei der Einheit für mehrere Teilnehmer (22) und des Sendens des Wähltones an das Telefon (26), bei dem der Aushängezustand festgestellt wurde.

11. Verfahren nach Anspruch 9 oder 10, gekennzeichnet durch den Schritt, vor dem Schritt des Sendens einer Anrufherkunftsnachricht, des Empfangs einer den anzurufenden Teilnehmer anzeigenden Wählfolge von dem einen Teilnehmertelefon (26) und des Verwendens der empfangenden Wählfolge, um die Anrufherkunftsnachricht zu erzeugen.

12. Verfahren nach einem der Ansprüche 9 bis 11, gekennzeichnet durch die Schritte:
- Empfangen einer Kanalzuweisung und einer Benachrichtigung über einen eingehenden Anruf bei der Einheit für mehrere Teilnehmer;
- Senden einer Kontaktaufnahmeantwort von der Einheit für mehrere Teilnehmer zur Basisstation, um eine Anrufsherkunft zu vervollständigen;
- Empfangen von der Basisstation bei der Einheit für mehrere Teilnehmer einer Anrufszuweisungsnachricht, die den eingehenden Anruf als einen Anruf festlegt, der bei dem Teilnehmertelefon endet, das mit der Einheit für mehrere Teilnehmer gekoppelt ist;
- Senden einer Bestätigung über die Anrufszuordnungsnachricht, und zwar von der Einheit für mehrere Teilnehmer;
- Senden eines Rufsignals von der Einheit für mehrere Teilnehmer an das Teilnehmertelefon, bei dem der eingehende Anruf enden soll; und
- Senden einer Verbindungsnachricht von der Einheit für mehrere Teilnehmer an die Basisstation als Reaktion auf eine Feststellung des Aushängezustandes des Telefons.

13. Verfahren nach Anspruch 12, gekennzeichnet durch die Schritte, nach dem Schritt des Sendens einer Kontaktaufnahmeantwort:
- Senden einer Freigabeanforderung von der Einheit für mehrere Teilnehmer an die Basisstation, um den durch die Kanalzuweisung zugewiesenen Kanal auszulösen; und
- Empfangen bei der Einheit für mehrere Teilnehmer einer Bestätigung über die Freigabeanforderung von der Basisstation.

14. Verfahren nach den Ansprüchen 12 und 13, wobei der Schritt des Empfangens einer Kanalzuweisung und einer Mitteilung über einen eingehenden Anruf die Schritte aufweist:
- Empfangen bei der Einheit für mehrere Teilnehmer einer Nachricht, die einen Kanal für den Empfang einer Kontaktaufnahmenachricht angibt;
- Empfangen bei der Einheit für mehrere Teilnehmer einer Kontaktaufnahmenachricht, die eine Benachrichtigung über einen eingehenden Anruf in dem angegebenen Kanal enthält;
- Senden einer Anforderung von der Einheit für mehrere Teilnehmer an die Basisstation, einen Kanal für eine Antwort auf die Kontaktaufnahmenachricht zuzuweisen; und
- Empfangen von der Basisstation einer Zuweisungsrücknachricht, die einen Kanal für die Kontaktaufnahmeantwort zuweist.

15. Verfahren nach Anspruch 9, bei dem die Funkübertragungsstrecke ein Basisstations-Sende-Empfangs-Gerät (26) aufweist, gekennzeichnet durch die Schritte:
- Feststellen bei dem Basisstation-Sende-Empfangs-Gerät (28) eines Pools verfügbarer Verkehrssendekanäle, wobei jeder Verkehrssendekanal einen Zeitschlitz in einem sich wiederholenden Zeitvielfachzugriffs-Rahmen bei einer vorgegebenen Trägerfrequenz hat;
- Antworten bei der Einheit (22) für mehrere Teilnehmer auf ein Feststellen eines Informationsabschnitts bei einem Telefon (26), und zwar durch Senden einer Anforderung nach einer Zuweisung eines Verkehrssendekanals;
- Auswählen bei der Basisstation eines verfügbaren Verkehrssendekanals aus dem Pool der verfügbaren Verkehrssendekanäle in Reaktion auf den Empfang der Kanalzuweisungsanforderung;
- Senden einer Identifikation des ausgewählten Kanals an die Einheit für mehrere Teilnehmer in einem ersten Schlitz und Entfernen des ausgewählten Kanals aus dem Pool der verfügbaren Verkehrskanäle; und
- Senden des Informationsabschnitts von der Einheit für mehrere Teilnehmer in dem ausgewählten Kanal in Reaktion auf den Empfang der Identifikation des ausgewählten Kanals.

16. Verfahren nach Anspruch 15, gekennzeichnet durch die Schritte:
- Feststellen eines Endes des Informationsabschnitts bei der Basisstation;
- Senden einer Kanalfreigabemitteilung an die Einheit für mehrere Teilnehmer, um den ausgewählten Kanal freizugeben;
- Auslösen des ausgewählten Kanals an den Pool verfügbarer Verkehrssendekanäle.

17. Verfahren nach Anspruch 16, gekennzeichnet durch den Schritt des Sendens einer Bestätigung über die Kanalfreigabemitteilung von der Einheit für mehrere Teilnehmer an die Basisstation, wobei die Kanalzuweisungsnachricht eine Identifikation eines geeigneten Kanals für das Senden der Bestätigung enthält.

18. Verfahren nach Anspruch 16 oder 17, dadurch gekennzeichnet, daß die Kanalfreigabemitteilung in dem ausgewählten Kanal gesendet wird.

19. Verfahren nach Anspruch 15, dadurch gekennzeichnet, daß der Schritt des Antwortens bei der Einheit (20) für mehrere Teilnehmer auf ein Feststellen eines Informationsabschnitts bei einem Telefon (26) aufweist:
- Feststellen eines Sprachabschnitts bei dem Basisstation-Sende-Empfangs-Gerät, welcher zum Senden an eines der Telefone aus der Vielzahl von Teilnehmertelefonen bestimmt ist.

20. Verfahren nach Anspruch 19, gekennzeichnet durch die Schritte:
- Feststellen bei der Basisstation des Endes des für das Telefon bestimmten Sprachabschnitts; und
- Senden einer Freigabemitteilung über den ausgewählten Kanal an die Einheit für mehrere Teilnehmer und Auslösen des ausgewählten Kanals an den Pool verfügbarer Verkehrssendekanäle.

21. Verfahren nach einem oder mehreren der Ansprüche 15 bis 20, dadurch gekennzeichnet, daß der Informationsabschnitt einen Sprachabschnitt enthält, und wobei der Schritt des Sendens des Sprachabschnitts ein Komprimieren und Codieren des erfaßten Sprachabschnitts in eine digitale Bitfolge umfaßt.

22. Verfahren nach einem oder mehreren der Ansprüche 15 bis 21, dadurch gekennzeichnet, daß der erste Zeitschlitz eine Vielzahl von Zeiteinteilungs-Subschlitze enthält, daß die Kanalzuweisung in einem Subschlitz des ersten Schlitzes gesendet wird und daß der erste Schlitz von einem anderen Kanal als der ausgewählte Kanal ist.

23. Verfahren nach einem oder mehreren der Ansprüche 15 bis 22, dadurch gekennzeichnet, daß der Schritt des Sendens einer Identifikation des zugewiesenen Kanals das Senden der Identifikation mit Zeit-, Frequenz- oder Leistungs-Diversität umfaßt.

24. Verfahren nach Anspruch 22 oder 23, dadurch gekennzeichnet, daß der erste Schlitz ein Schlitz eines Steuerkanals ist, der eine Vielzahl von unterschiedlichen Trägerfrequenzen zugeordneten Schlitzen aufweist.

## Revendications

1. Unité (22) pour plusieurs abonnés pour communication par radiotéléphonie entre des téléphones (26) d'abonnés et une station de base ayant un émetteur-récepteur (28), ladite station de base ayant une liaison avec un réseau téléphonique (32), ladite unité pour plusieurs abonnés comportant :
- une pluralité de connecteurs destinés à établir une communication électrique avec la pluralité de téléphones d'abonnés ;
- une interface (23) d'abonnés couplée aux connecteurs pour détecter un état décroché à chacun des téléphones ;
- un processeur (58) destiné à moduler des données provenant des téléphones pour une transmission par la liaison radio ;
- un émetteur-récepteur (42) destiné à émettre les données modulées depuis chaque téléphone auquel une donnée est détectée vers la station de base et à recevoir des données de la station de base pour les transmettre aux téléphones ;
- un processeur (60) destiné à démoduler des données provenant de l'émetteur-récepteur pour une transmission par l'intermédiaire des connecteurs aux téléphones,
caractérisée par
- un détecteur (56) d'activité d'abonné destiné à détecter, par l'intermédiaire des connecteurs, la présence de données devant être transmises à chaque téléphone auquel un état décroché est détecté ;
- le processeur pour la modulation de données comportant une pluralité de modulateurs (58), pouvant être affectés chacun, indépendamment, à l'un de la pluralité de téléphones (26) et le processeur pour la démodulation des données comportant une pluralité de démodulateurs (60), pouvant être affectés chacun, indépendamment, à l'un de la pluralité de téléphones (26) ; et par un contrôleur (40) destiné à affecter les modulateurs et démodulateurs entre les téléphones pour lesquels la présence de données est détectée et à désaffecter les modulateurs et démodulateurs des téléphones pour lesquels la fin de la présence de données est détectée.

2. Unité selon la revendication 1, dans laquelle les données devant être transmises comprennent de la parole, caractérisée en ce que le détecteur (56) d'activité d'abonné comporte un détecteur d'émissions vocales, en ce que le processeur (58) destiné à moduler des données comprend un codeur d'émissions vocales destiné à convertir des émissions vocales en une forme numérique comprimée, et en ce que le processeur (60) destiné à démoduler des données comprend un décodeur destiné à convertir des séquences de bits numériques comprimées en émissions vocales.

3. Unité selon les revendications 1 ou 2, caractérisée par un moyen (40) couplé au détecteur (56) d'activité d'abonné pour demander l'affectation d'une voie de transmission de trafic depuis la station de base lors de la détection de la présence de données à un téléphone (26).

4. Unité selon l'une quelconque des revendications précédentes, caractérisée par un moyen couplé au détecteur (56) d'activité d'abonné pour demander la désaffectation d'une voie de transmission de trafic depuis la station de base lors de la détection de la fin de la présence de données à un téléphone (26).

5. Unité selon une ou plusieurs des revendications précédentes, caractérisée en ce que l'émetteur-récepteur (28) comporte un moyen pour émettre et recevoir des trames d'information numérique dans un format à accès multiples par répartition dans le temps, chaque trame comprenant une pluralité de tranches de temps pour une information d'affectation et de désaffectation de voie.

6. Unité selon une ou plusieurs des revendications précédentes, caractérisée en ce que l'interface (23) d'abonnés comporte un moyen pour générer une fréquence vocale en réponse à la détection d'un état décroché pour une communication au téléphone pour lequel l'état décroché a été détecté.

7. Unité selon une ou plusieurs des revendications précédentes, caractérisée en ce que l'interface (23) d'abonnés comporte un moyen pour la génération d'un signal d'appel par sonnerie en réponse à une indication d'un appel entrant depuis la station de base pour une communication au téléphone (26) auquel l'appel entrant est destiné.

8. Unité selon une ou plusieurs des revendications précédentes,
caractérisée par
- un bus (50) interconnectant les interfaces (23) d'abonnés et les processeurs (58, 60) ; et
- un affaiblisseur multiliaison (98) connecté au bus ayant un accès d'entrée pour un abonné à données à haute vitesse destiné à permettre à des données d'être transmises entre la station de base et l'abonné à données à haute vitesse par l'intermédiaire de l'émetteur-récepteur.

9. Procédé pour la communication d'une pluralité de téléphones (26) d'abonnés par l'intermédiaire d'une liaison radio avec une station de base (25, 28, 29, 30) éloignée des téléphones, en passant par une unité (22) pour plusieurs abonnés connectée à chacun de la pluralité de téléphones d'abonnés et comportant une pluralité de modulateurs et une pluralité de démodulateurs, le procédé comprenant les étapes dans lesquelles :
- on détecte un état décroché à l'un des téléphones d'abonnés ;
- on émet un signal vers la station de base demandant une affectation d'une voie inverse ;
- on émet une affectation de voie inverse à l'unité pour plusieurs abonnés à partir de la station de base affectant une voie parmi une pluralité de voies ;
caractérisé par les étapes additionnelles dans lesquelles, après l'étape de détection d'un état décroché,
- on sélectionne l'un de la pluralité de modulateurs (58) et l'un de la pluralité de démodulateurs (60) en réponse à l'état décroché détecté et on affecte le modulateur sélectionné et un démodulateur sélectionné au téléphone d'abonnés ;
- on transmet depuis l'unité pour plusieurs abonnés à la station de base un message d'origine d'appel identifiant le téléphone d'abonnés et une partie devant être appelée ; et
- on transmet une demande pour désaffecter l'affectation de voie en réponse à l'achèvement de la transmission du message d'origine d'appel.

10. Procédé selon la revendication 9, caractérisé par, après l'étape de sélection d'un modulateur (58), l'étape de génération d'une fréquence vocale à l'unité pour plusieurs abonnés (22) et de transmission à celle-ci du téléphone (26) auquel l'état décroché a été détecté.

11. Procédé selon la revendication 9 ou 10, caractérisé par, avant l'étape de transmission d'un message d'origine d'appel, l'étape de réception depuis le téléphone d'abonnés (26) d'une séquence de numérotation indiquant une partie devant être appelée et d'utilisation de la séquence de numérotation reçue pour générer le message d'origine d'appel.

12. Procédé selon l'une quelconque des revendications 9-11, caractérisé par les étapes dans lesquelles :
- on reçoit à l'unité pour plusieurs abonnés une affectation de voie et une notification d'un appel entrant ;
- on émet depuis l'unité pour plusieurs abonnés vers la station de base une réponse d'appel de personne pour achever l'établissement de l'origine de l'appel ;
- on reçoit à l'unité pour plusieurs abonnés depuis la station de base un message d'affectation d'appel établissant l'appel entrant comme un appel qui se termine à un téléphone d'abonnés qui est couplé à l'unité pour plusieurs abonnés ;
- on transmet depuis l'unité pour plusieurs abonnés un accusé de réception du message d'affectation d'appel ;
- on transmet, depuis l'unité pour plusieurs abonnés au téléphone d'abonnés auquel l'appel entrant doit aboutir, un signal de sonnerie d'appel ; et
- on transmet depuis l'unité pour plusieurs abonnés à la station de base un message de connexion en réponse à une détection de l'état décroché du téléphone.

13. Procédé selon la revendication 12, caractérisé par, après l'étape de transmission d'une réponse d'appel de personne, l'étape dans laquelle :
- on transmet depuis l'unité pour plusieurs abonnés vers la station de base une demande de désaffectation pour libérer la voie affectée par l'affectation de voie ; et
- on reçoit à l'unité pour plusieurs abonnés, depuis la station de base, un accusé de réception de la demande de désaffectation.

14. Procédé selon les revendications 12 et 13, dans lequel l'étape de réception d'une affectation de voie et de notification d'un appel entrant comprend les étapes dans lesquelles :
- on reçoit à l'unité pour plusieurs abonnés un message identifiant une voie pour la réception d'un message d'appel de personne ;
- on reçoit à l'unité pour plusieurs abonnés un message d'appel de personne comprenant une notification d'appel entrant dans la voie identifiée ;
- on émet depuis l'unité pour plusieurs abonnés une demande pour la station de base afin d'affecter une voie pour une réponse au message d'appel de personne ; et
- on reçoit depuis la station de base un message d'affectation inverse affectant une voie pour la réponse d'appel de personne.

15. Procédé selon la revendication 9, dans lequel ladite liaison radio comprend un émetteur-récepteur (26) de station de base, caractérisé par les étapes dans lesquelles :
- on établit, à l'émetteur-récepteur (28) de la station de base, un groupe de voies disponibles de transmission de trafic, chaque voie de transmission de trafic ayant une tranche de temps dans une trame répétitive d'accès multiples à répartition dans le temps à une fréquence porteuse préderminée ;
- on répond, à l'unité (22) pour plusieurs abonnés, à la détection d'une émission d'information à un téléphone (26), en émettant une demande pour affecter une voie de transmission de trafic ;
- on sélectionne à la station de base une voie de transmission de trafic disponible parmi le groupe de voies de transmission de trafic disponibles en réponse à la réception de la demande d'affectation de voie ;
- on émet dans une première tranche une identification de la voie sélectionnée vers l'unité pour abonnés multiples et on enlève la voie sélectionnée du groupe de voies de trafic disponibles ; et
- on émet l'émission d'information depuis l'unité pour plusieurs abonnés dans la voie sélectionnée en réponse à la réception de l'identification de la voie sélectionnée.

16. Procédé selon la revendication 15, caractérisé par les étapes dans lesquelles :
- on détecte l'achèvement de l'émission d'information à la station de base ;
- on transmet une notification de désaffectation de voie à l'unité pour plusieurs abonnés pour désaffecter la voie sélectionnée ;
- on libère la voie sélectionnée pour le groupe de voies de transmission de trafic disponibles.

17. Procédé selon la revendication 16, caractérisé par l'étape consistant à émettre un accusé de réception de la notification de désaffectation de voie depuis l'unité pour plusieurs abandonnés vers la station de base, dans lequel la notification d'affectation de voie comprend une identification d'une voie appropriée pour la transmission de l'accusé de réception.

18. Procédé selon la revendication 16 ou 17, caractérisé en ce que la notification de désaffectation de voie est transmise dans la voie sélectionnée.

19. Procédé selon la revendication 15, caractérisé en ce que l'étape de réponse, à l'unité (20) pour plusieurs abonnés, à une détection d'une émission d'information à un téléphone (26) comprend :
- la détection d'une émission vocale à l'émetteur-récepteur de la station de base qui est destinée à être transmise à l'un des téléphones parmi la pluralité de téléphones d'abonnés.

20. Procédé selon la revendication 19, caractérisé par les étapes dans lesquelles :
- on détecte, à la station de base, l'achèvement de l'émission vocale prévue pour le téléphone ; et
- on transmet à l'unité pour plusieurs abonnés une notification de la désaffectation de la voie sélectionnée et on libère la voie sélectionnée pour le groupe de voies de transmission de trafic disponibles.

21. Procédé selon une ou plusieurs des revendications 15 à 20, caractérisé en ce que l'émission d'information comprend une émission vocale et dans lequel l'étape de transmission de l'émission vocale comprend une compression et un codage de l'émission vocale détectée en une séquence numérique de bits.

22. Procédé selon une ou plusieurs des revendications 15 à 21, caractérisé en ce que la première tranche de temps comprend une pluralité de tranches secondaires de répartition dans le temps, en ce que l'affectation d'une voie est transmise dans une tranche secondaire de la première tranche et en ce que la première tranche est d'une voie différente de la voie sélectionnée.

23. Procédé selon une ou plusieurs des revendications 15 à 22, caractérisé en ce que l'étape de transmission d'une identification de la voie localisée comprend la transmission de l'identification avec une diversité dans le temps, dans la fréquence ou dans le niveau de puissance.

24. Procédé selon la revendication 22 ou 23, caractérisé en ce que la première tranche est une tranche d'une voie de commande ayant une pluralité de tranches affectées à différentes fréquences porteuses.
